# EUROPEAN PATENT SPECIFICATION

(11) **EP 1 406 362 B1**
(45) Date of publication and mention of the grant of the patent: **19.10.2005**
(21) Application number: 03425347.6
(22) Date of filing: 30.05.2003
(51) Int. Cl.: H02G 3/32

(54) **Improved bracket system equipped with rapid engagement fixing for wire troughs**
Verbesserte Trageeinrichtung für Drahtgitterkanal mit Schnellkupplung
Support de fixation améliorée pour canalisation en fils avec fixation rapide

(30) Priority: 01.10.2002 IT RM20020155
(43) Date of publication of application: 07.04.2004
(73) Proprietor: NLC Sistemi Metallici S.p.A., 04100 Latina (IT)
(72) Inventor: Caprettini, Giorgio, 10100 Torino (IT); Marchese Alberto, 10100 Torino (IT)
(74) Representative: Sarpi, Maurizio

(56) References cited:
- FR-A- 2 726 697
- FR-A- 2 757 696

## Description

The present invention relates to the field of raceways and/or cable troughs and in particular to an innovative system for hooking rapidly the cable troughs to the corresponding hangers or support brackets.

Currently, different kinds of bracket system for wire troughs are available on the market, but a drawback common to all of them is given by the fact that for the assembly thereof, after the laying of the raceways on the brackets or hangers, some additional operations for fixing the raceways themselves are needed. More specifically, such fixing operations require interventions on the hangers for example by bending specific tongues or on the raceway for example by applying thereto some specific accessories, such as screws, bolts or plates with various shape and nature.

It is evident that the possible disassembly of such canalization systems can be carried out by performing backwards the assembly operations, even in this case by having to bend, unscrew or disassemble the various fixing accessories.

It is known, from FR2726697, a support arm device for supporting a cable conduit to a support structure, including a longitudinal surface designed to contact one of the exterior surfaces of the cable conduit. The surface has at least two lugs designed to cooperate with two structural elements on the cable conduit. The longitudinal surface also has a stop part which accommodates a third structural element on the cable conduit by elastic deformation of the cable conduit and permits the cable conduit to be firmly held on the support arm. The stop part has a height roughly equal to the thickness of the perforated sheet metal.

A drawback of such known support arm or bracket consists in that said lugs are dangerous for the installer, which may accidentally injure themselves during manipulation of the bracket.

A further drawback of said known bracket is that said lugs may be accidentally damaged: they can be plastically deformed (e.g. squashed) so as said structural element of the cable conduit can not cooperate with them.

In addition, the stop part which is elastically deformed to firmly held the cable conduit require the use of tools in order to unlock the cable conduit from the bracket.

It is also known, from FR2757696, a bracket mounted in a vertical rail which has a U-shaped profile. The bracket, whose inner end fits closely inside the rail, is held in place by a split pin which passes through holes in each of the sides of the rail and also through a hole in the bracket. The top edge of the bracket carries a number of horizontal mounting slots that attach to the trays. Bolts can be passed through these mounting slots to fix the tray in place. A second hole in the vertical part of the bracket allows a bolt to pass through. The bolt also passes through a hole in one side wall of the upright to fix the bracket rigidly in place.

A drawback of such known bracket consists in that, in case of a perforated sheet metal cable tray is to be installed, it require the use of bolts for fixing the trays. Alternatively, in case of a wire mesh cable tray is to be installed, closely to said mounting slots are further provided notches and tongues that constitute housings for longitudinal wires of wire mesh cable tray, which tongues are bent down in order to fix the cable tray itself.

In view of the above, it is clear that both the known bracket systems require the use of fixing tools and/or accessories to lock or unlock the cable trays onto the brackets.

It is thus the main object of the present invention to provide a fixing device for raceways or cable troughs enabling to assemble the wire trough without having to perform any work subsequent to the laying thereof on the bracket.

An additional object of the invention is to provide a bracket system of the cable-bearing raceways enabling to lay the wire trough on the bracket itself without utilizing additional tools or accessories.

This has been achieved, according to the invention, by providing an improved bracket system for fixing raceways on supporting brackets, comprising brackets, each having an arm suitable to support the raceway, the said arm being equipped with means for hooking rapidly raceways, which means automatically lock the raceways without its being necessary to intervene in any way on the bracket or on the raceway, wherein said means for hooking rapidly raceways are constituted by one or more slots formed in the arm and extending parallel to the longitudinal axis thereof, the one or more slots being opened upwards at one end thereof, the other end being closed, so that one or more longitudinal longerons of the raceway may be inserted at the time of the laying thereof within said slots via the open ends thereof and slid towards the closed ends, characterized in that the upper wall or side of each slot forms a tongue which is equipped, at an appropriate distance from the free end thereof, with a projection or jut projecting toward the inside of the slot, apt to slightly reduce the clearance width of the passage for the longeron, so that it is necessary to exert a slight forcing to bring the longeron in abutment onto the closed end of the slot and lock it in situ, by exploiting the proper elasticity of the material the bracket is made of.

A better understanding of the present invention will take place with the following description and by referring to the enclosed figures which illustrate, by way of example, some preferred embodiments of the invention.

In the drawings:
figure 1 is an axonometric view of the invention, at one of the fixing brackets, showing how the trough is inserted and locked on the bracket itself;

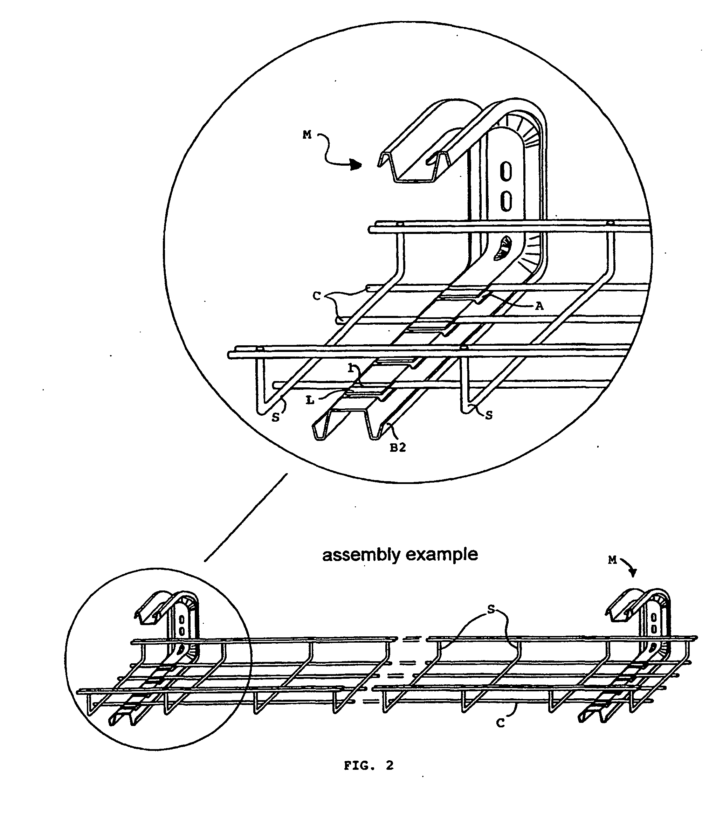

figure 2 is an axonometric view with enlarged detail, showing an assembly example;
figure 3A, 3B and 3C are a side view, a plan view and a section view of a first embodiment of the invention, respectively;
figure 3D and 3E are enlarged details, respectively related to the subsequent positions taken by the longitudinal longerons of the trough during the insertion thereof and of the jut or projection implementing the release automatic locking thereof; and
figures 4Aö4E, equal to the preceding 3Aö3E, relate to a second embodiment of the invention.

By referring to the figures listed above, the invention which is described comprises a plurality of substantially "L"-like shaped brackets M, which provide a first arm B1 which has to be fixed in a known way to the bearing structure, whereas a second arm B2 is apt to support and lock the raceway wherein the cables to be laid are made to pass. It is evident that the brackets M are placed transversely to the cable-bearing raceway, which rests on the second arm B2.

According to a peculiar feature of the invention, said second arm B2 is equipped with means for hooking or engaging rapidly the raceway, which is preferably constituted by longitudinal longerons C and "U"-shaped cross hangers S. Said rapid engagement means are substantially constituted by one or more slots A parallel to the longitudinal axis of the arm B2 itself and opened upwards at one end thereof, wherein one or more of the longitudinal longerons C of the raceway are inserted at time of the laying. Said slots A are sized so as to allow, with a minimum sliding backlash, the passage of the longerons C of the raceway. As it can be clearly seen by the figures, the slots A are preferably opened at their end facing the free end of the second arm B2, but in any case they are all opened at one same end.

One or more tangs or tongues L are thus created, which constitute the upper wall of each slot A and which, differently from what already known, are equipped, at an appropriate distance from the free end thereof, with a projection or jut 1 projecting towards the inside of the slot A apt to slightly reduce the clearance width of the passage for the longeron C, so that it is necessary to exert a slight forcing to bring the longeron C in abutment onto the bottom of the slot A, locking it in situ, by exploiting the proper elasticity of the material which is preferably, but not exclusively, metallic. Furthermore, the presence of such projection 1 also avoids any accidental disengagement of the raceway from the brackets M, it being however possible to perform the disassembly thereof by performing a manoeuvre contrary to the one described above, without the help of any tool.

Said rapid engagement means allow thus to fix the wire trough or raceway to each bracket M by means of a unilateral release engagement system.

From what has been said so far, it clearly results that, according to the invention, it is advantageously possible to shorten considerably the time for installing (and disinstalling) the raceways and to eliminate all those accessories necessary to lock the raceways themselves.

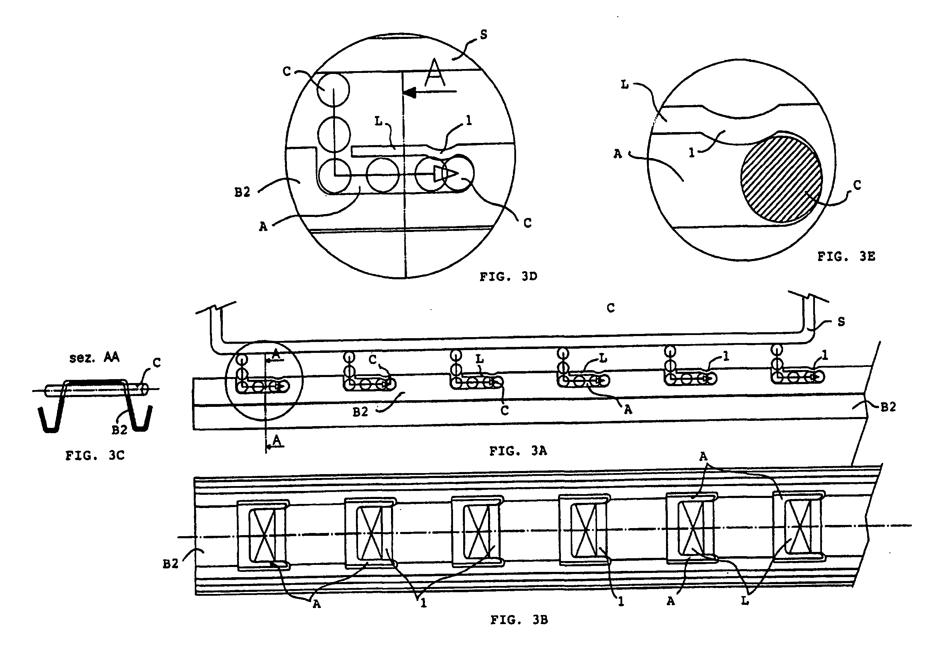

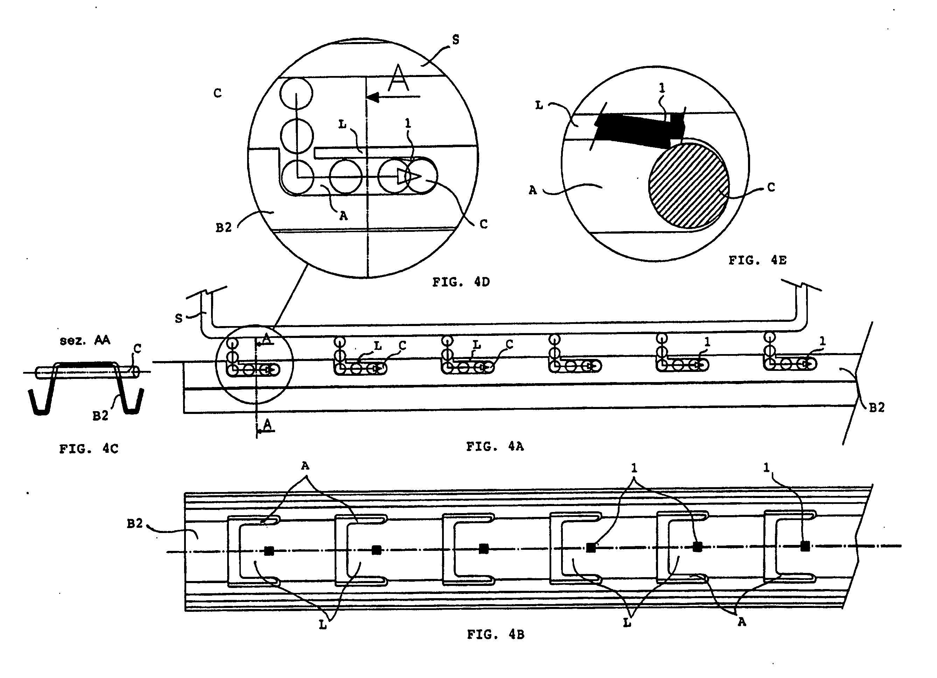

At this point, it is also useful noting that the slots A, and in particular the juts or projections 1 implementing the fixing for the metallic rods constituting the longerons C of the raceways, may have different shapes and the figure 3 and 4 show two of them.

In particular, the first illustrated embodiment provides a jut 1 constituted by a rounded protuberance placed transversely to the slot A, whereas the second embodiment provides a jut constituted by a plane 1 inclined in the installation direction of the longerons C, which plane ends with a tooth opposing to the disengagement of the longeron C from the slot A.

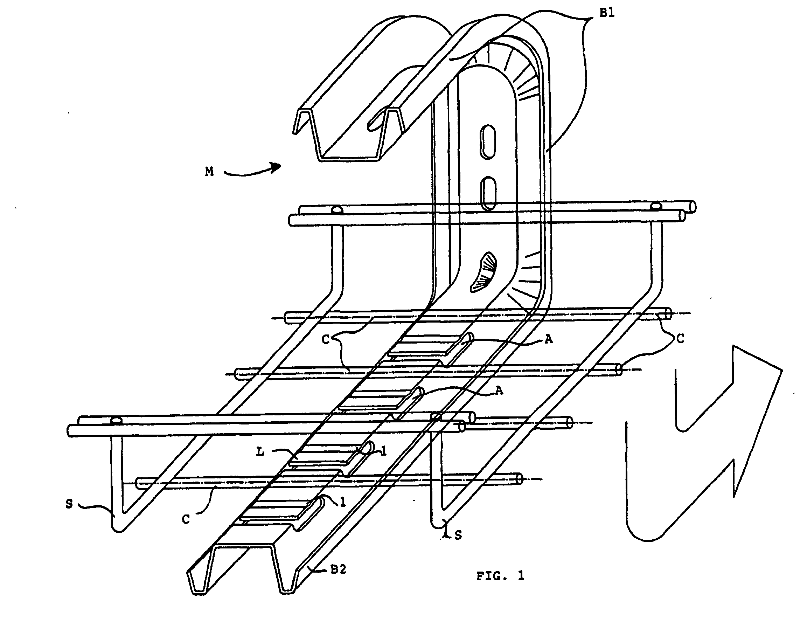

At last, it is to be noted that the brackets, apart from their "L" shape for the fixing thereof to the wall, can also be "C" or "U" shaped (as shown in figure 1), so as to allow the fixing thereof to the ceiling too.

The present invention has been described and illustrated in two preferred embodiments thereof, but it is clear that any person skilled in the art could apply modifications however comprised within the protective scope of the present industrial invention, as defined by the appended claims.

## Claims

1. Improved bracket system for fixing raceways on supporting brackets, comprising brackets (M), each having an arm (B2) suitable to support the raceway, the said arm being equipped with means for hooking rapidly raceways, which means automatically lock the raceways without its being necessary to intervene in any way on the bracket (M) or on the raceway, wherein said means for hooking rapidly raceways are constituted by one or more slots (A) formed in the arm (B2) and extending parallel to the longitudinal axis thereof, the one or more slots being opened upwards at one end thereof, the other end being closed, so that one or more longitudinal longerons (C) of the raceway may be inserted at the time of the laying thereof within said slots (A) via the open ends thereof and slid towards the closed ends,
**characterized in that** the upper wall or side of each slot (A) forms a tongue (L) which is equipped, at an appropriate distance from the free end thereof, with a projection or jut (1) projecting toward the inside of the slot (A), apt to slightly reduce the clearance width of the passage for the longeron (C), so that it is necessary to exert a slight forcing to bring the longeron (C) in abutment onto the closed end of the slot (A) and lock it in situ, by exploiting the proper elasticity of the material the bracket (M) is made of.

2. Bracket system according to the preceding claim, **characterized in that** it comprises a plurality of substantially "L"-,"U"- or "C"-shaped brackets (M), which provide a first arm (B1) adapted to be fixed in a known way to the bearing structure, and a second arm (B2) constituting the said supporting and locking arm; said brackets (M) being placed transversely to the cable-bearing raceway which rests on the second arm (B2).

3. Bracket system according to any preceding claim, **characterized in that** said means for hooking and locking rapidly is adapted to secure raceways in the form of a wire trough, constituted by longitudinal longerons (C) and "U"-shaped cross hangers (S).

4. Bracket system according to any preceding claim, **characterized in that** said slots (A) are sized so as to allow, with a minimum sliding backlash, the passage of longerons (C) of the raceway.

5. Bracket system according to any preceding claim, **characterized in that** said slots (A) are opened at their end facing the free end of the second arm (B2).

6. Bracket system according to any preceding claim, **characterized in that** said brackets (M) are manufactured in metal.

7. Bracket system according to claim 1, **characterized in that** said jut (1) is constituted by a rounded protuberance placed transversely to the slot (A).

8. Bracket system according to claim 1, **characterized in that** said jut (1) is constituted by a plane inclined in the installation direction of the longerons (C), which plane ends with a tooth opposing the disengagement of the longeron (C) from the slot (A).

## Patentansprüche

1. Verbessertes Auslegersystem zur Befestigung von Kabelrinnen auf Tragauslegern, Ausleger (M) umfassend, wovon jeder einen Arm (B2) besitzt, der sich dazu eignet, die Kabelrinne zu tragen, wobei der Arm mit Einrichtungen ausgestattet ist, um Kabelrinnen schnell einzuhaken, welche Einrichtungen die Kabelrinnen automatisch festsetzen, ohne dass es notwendig wäre, auf irgendeine Weise auf die Ausleger (M) oder die Kabelrinne einzuwirken, wobei die Einrichtungen zum schnellen Einhaken von Kabelrinnen aus einem oder mehreren Schlitz/en (A) bestehen, der/die im Arm (B2) ausgebildet ist/sind und sich parallel zu dessen Längsachse erstreckt/erstrecken, wobei der eine oder die mehreren Schlitz/e an einem seiner/ihrer Enden nach oben offen ist/sind, wobei das andere Ende geschlossen ist, so dass ein oder mehrere Längsträger (C) der Kabelrinne zum Zeitpunkt ihrer Verlegung über ihre offenen Enden in die Schlitze (A) eingesteckt und zu den geschlossenen Enden hin geschoben werden kann/können,
**dadurch gekennzeichnet, dass** die obere Wand oder Seite jedes Schlitzes (A) eine Zunge (L) bildet, die in einem angemessenen Abstand von seinem freien Ende mit einem Vorsprung oder Überhang (1) ausgestattet ist, der zur Innenseite des Schlitzes (A) vorspringt und dazu ausgelegt ist, die lichte Breite des Durchgangs für den Längsträger (C) zu reduzieren, so dass eine leichte Druckwirkung ausgeübt werden muss, um den Längsträger (C) in Anlage am geschlossenen Ende des Schlitzes (A) zu bringen und ihn dort an Ort und Stelle festzusetzen, indem die Eigenelastizität des Materials ausgenutzt wird, aus dem der Ausleger (M) besteht.

2. Auslegersystem nach dem vorhergehenden Anspruch, **dadurch gekennzeichnet, dass** es mehrere im Wesentlichen "L"-, "U"- oder "C"-förmige Ausleger (M) umfasst, die einen ersten Arm (B1) bereitstellen, der dazu ausgelegt ist, auf eine bekannte Weise an der Halterungsstruktur befestigt zu werden, und einen zweiten Arm (B2), der den Trag- und Feststellarm darstellt; wobei die Ausleger (M) quer zur kabeltragenden Kabelrinne angeordnet sind, die auf dem zweiten Arm (B2) aufliegt.

3. Auslegersystem nach jedem vorhergehenden Anspruch, **dadurch gekennzeichnet, dass** die Einrichtungen zum Einhaken und schnellen Festsetzen dazu ausgelegt sind, Kabelrinnen in der Form einer Gitterwanne zu sichern, die aus Längsträgern (C) und "U"-förmigen Querhängern (S) besteht.

4. Auslegersystem nach jedem vorhergehenden Anspruch, **dadurch gekennzeichnet, dass** die Schlitze (A) so bemessen sind, dass der Durchgang der Längsträger (C) mit einem minimalen Gleitspiel ermöglicht wird.

5. Auslegersystem nach jedem vorhergehenden Anspruch, **dadurch gekennzeichnet, dass** die Schlitze (A) an ihren dem freien Ende des zweiten Arms (B2) zugewandten Ende offen sind.

6. Auslegersystem nach jedem vorhergehenden Anspruch, **dadurch gekennzeichnet, dass** die Ausleger (M) aus Metall hergestellt sind.

7. Auslegersystem nach Anspruch 1, **dadurch gekennzeichnet, dass** der Überhang (1) aus einer abgerundeten Ausstülpung besteht, die quer zum Schlitz (A) angeordnet ist.

8. Auslegersystem nach Anspruch 1, **dadurch gekennzeichnet, dass** der Überhang (1) aus einer Ebene besteht, die in der Einbaurichtung der Längsträger (C) geneigt ist, welche Ebene mit einem Zahn endet, der sich dem Freisetzen des Längsträgers (C) aus dem Schlitz (A) widersetzt.

## Revendications

1. Système de console perfectionnée pour fixer des goulottes ou des chemins de câbles sur des supports en consoles comprenant des consoles (M) possédant chacune un bras (B2) prévu pour supporter la goulotte, ledit bras étant pourvu de moyens d'accrochage rapide des goulottes ou chemins de câbles qui verrouille automatiquement les goulottes sans qu'il soit nécessaire d'intervenir en aucune façon sur la console (M) ou sur la goulotte dans lequel ces moyens d'accrochage rapide des goulottes sont constitués d'une ou de plusieurs fentes (A) formées dans le bras (B2) et s'étendant parallèlement à son axe longitudinal, cette une ou plusieurs fentes étant ouverte vers le haut à l'une de ses extrémités, l'autre extrémité étant fermée de façon qu'un ou plusieurs longerons longitudinaux (C) de la goulotte puissent être insérés au moment de leur pose dans ces fentes (A) à travers les extrémités ouvertes et coulissent vers les extrémités fermées **caractérisé en ce que** la paroi supérieure ou latérale de chaque fente (A) forme une patte (L) pourvue à une distance appropriée de son extrémité libre d'une saillie se projetant vers l'intérieur de la fente (A), susceptible de réduire légèrement la largeur de jeu pour le passage du longeron (C) de façon qu'il ne soit nécessaire d'exercer qu'une faible force pour amener le longeron (C) en butée sur l'extrémité fermée de la fente (A) et le verrouiller sur place en utilisant l'élasticité propre de la matière dont est faite la console.

2. Système de console selon la revendication précédente **caractérisé en ce qu'**il comprend une pluralité de consoles (M) conformées sensiblement en "L", "U" ou "C" qui constituent un premier bras (B1) prévu pour être fixé de façon connue à la structure porteuse, et **en ce qu'**il comprend un second bras (B2) formant ledit bras porteur et de verrouillage, les consoles (M) étant placées transversalement au chemin de câbles qui repose sur le second bras (B2).

3. Système de console selon l'une quelconque des revendications précédentes **caractérisé en ce que** ledit moyen d'accrochage et de verrouillage rapide est prévu pour fixer les chemins de câbles formant une auge à câbles constituée par les longerons longitudinaux (C) et des crochets de suspension de section en "U".

4. Système de console selon l'une quelconque des revendications précédentes **caractérisé en ce que** lesdites fentes (A) sont de dimensions telles qu'elles permettent avec un minimum de débattement de coulissement, le passage des longerons (C) du chemin de câbles.

5. Système de console selon l'une quelconque des revendications précédentes **caractérisé en ce que** lesdites fentes (A) sont ouvertes à leur extrémité en regard de l'extrémité libre du second bras (B2).

6. Système de console selon l'une quelconque des revendications précédentes **caractérisé en ce que** les consoles (M) sont fabriquées en métal.

7. Système de console selon la revendication 1 **caractérisé en ce que** ladite saillie (1) est constituée par une protubérance arrondie placée transversalement à la fente (A).

8. Système de console selon la revendication 1 **caractérisé en ce que** ladite saillie (1) est formée par un plan incliné dans la direction d'installation des longerons (C), plan qui se termine par une denture s'opposant à la sortie du longeron (C) de la fente (A).
